# FASCICULE DE BREVET EUROPEEN

(11) **EP 4 066 966 B1**
(45) Date de publication et mention de la délivrance du brevet: **10.09.2025**
(21) Numéro de dépôt: 22164517.9
(22) Date de dépôt: 25.03.2022
(51) Int. Cl.: B22F 5/10, B33Y 80/00, B60G 7/00

(54) **BIELLETTE DE SUSPENSION OBTENUE PAR UNE TECHNIQUE DE FABRICATION ADDITIVE**
DURCH ADDITIVE FERTIGUNGSTECHNIK HERGESTELLTE AUFHÄNGUNGSSTANGE
SUSPENSION ROD OBTAINED BY AN ADDITIVE MANUFACTURING TECHNIQUE

(30) Priorité: 31.03.2021 FR 2103361
(43) Date de publication de la demande: 05.10.2022
(73) Titulaire: Renault s.a.s, 92100 Boulogne Billancourt (FR)
(72) Inventeur: GUILLAUMAT, Louis, 72000 le mans (FR); REULLIER, Anthony, 72000 le mans (FR)
(74) Mandataire: Renault Group

(56) Documents cités:
- EP-A1- 3 524 450
- DE-B3- 102017 002 581
- FR-A1- 3 035 605

## Description

### Domaine technique de l'invention

La présente invention concerne une biellette de suspension de véhicule automobile.

L'invention concerne plus particulièrement une biellette de suspension obtenue par une technique de fabrication additive utilisant un métal ou un polymère / composite.

### Arrière-plan technique

De manière connue, une biellette de suspension est par exemple réalisée par forgeage, notamment en alliage d'aluminium.

Les conceptions connues et ce type de techniques de production permettent à la biellette de satisfaire aux différentes contraintes liées d'une part à la résistance de la biellette et aussi à sa capacité de fusibilité.

L'invention vise à proposer une biellette de masse réduite qui satisfait à ces différents types de contraintes de conception.

EP3524450A1 divulgue une biellette de suspension comme dans le préambule de la revendication 1. DE102017002581 divulgue un bras de suspension connu.

### Résumé de l'invention

L'invention propose une biellette de suspension de véhicule automobile comportant :
- une première extrémité longitudinale, notamment configurée pour être reliée à un autre composant de la suspension ou à un élément de la caisse du véhicule ;
- une seconde extrémité longitudinale, notamment configurée pour être reliée à un autre composant de la suspension ou à un élément de la caisse du véhicule ;
- et un corps creux allongé qui s'étend entre la première extrémité et la seconde extrémité, caractérisée en ce que :
- la biellette 10 est réalisée en une seule pièce par une technique de fabrication additive ;
- le corps creux allongé 12 est délimité par enveloppe allongée ;
- et le corps creux est renforcé intérieurement par une série de croisillons, notamment adjacents, de renfort qui s'étendent dans un plan parallèle à un axe longitudinal reliant la première extrémité longitudinale à la seconde extrémité longitudinale.

Il est ainsi possible de renforcer la pièce localement tout en permettant une réduction de la quantité de matière dans les zones ou portions non sollicitées, ou les moins sollicitées.

Cette conception procure aussi une fonction de fusibilité qui est obtenue par une grande déformation sans rupture de la biellette.

Selon d'autres caractéristiques de l'invention :
- chaque croisillon de renfort est constitué d'une paire de traverses de renfort agencées en croix ;
- l'enveloppe du corps creux comporte au moins une paroi latérale allongée, et les croisillons de renfort sont formés en relief à partir d'une portion de la face interne de la au moins une paroi latérale ; par exemple, quatre croisillons de renfort sont agencés dans des zones à fortes sollicitations afin de diminuer la plastification de la biellette. ;
- l'enveloppe du corps creux allongé comporte au moins deux parois latérales allongées opposées, et les croisillons de renfort sont formés en relief à partir d'une portion de la face interne de chacune des au moins deux parois latérales ;
- chaque portion de la face interne d'une paroi latérale allongée s'étend longitudinalement depuis une extrémité longitudinale du corps creux allongé
- le corps allongé comporte une série de trous d'allégement qui sont formés dans des portions longitudinales de l'enveloppe allongée qui sont dépourvues de croisillons de renfort ;
- les croisillons de renfort s'étendent dans un plan longitudinal interne à l'enveloppe allongée ;
- le plan longitudinal est un plan longitudinal médian du corps allongé ;
- le corps allongé peut comporter une âme interne de renfort qui s'étend longitudinalement à l'intérieur de l'enveloppe, avec au moins une portion longitudinale de cette âme interne de renfort est constituée par les croisillons de renfort ;
- l'âme interne de renfort est conformée en une plaque interne qui relie entre elles deux parois opposées de l'enveloppe et elle peut comporter des évidements dont une série délimite les croisillons de renfort ;
- le corps allongé comporte une série de trous d'allégement qui sont formés au moins dans des portions d'au moins une des deux parois, entre des zones de raccordement des croisillons de renfort avec l'enveloppe allongée.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue en perspective d'un premier exemple de réalisation d'une biellette de suspension selon l'invention ;
[Fig.2] - la figure 2 est une vue en section par un plan transversal du corps allongé de la biellette de suspension représentée à la figure 1 ;
[Fig.3] - la figure 3 est une vue en coupe par un plan longitudinal médian du corps allongé de la biellette de suspension représentée à la figure 1 ;
[Fig.4] - la figure 4 est une vue analogue à celle de la figure 1 qui représente un second exemple de réalisation d'une biellette de suspension selon l'invention ;
[Fig.5] - la figure 5 est une vue en perspective et en coupe par un plan transversal de la biellette de suspension représentée à la figure 4 ;
[Fig.6] - la figure 6 est une vue en perspective et en coupe par un plan longitudinal médian de la biellette de suspension représentée à la figure 4 ;
[Fig.7] - la figure 7 est une vue en plan et en coupe par un plan longitudinal médian de la biellette de suspension représentée à la figure4.

### Description détaillée de l'invention

Pour la description de l'invention et la compréhension des revendications, on adoptera à titre non limitatif et sans référence limitative à la gravité terrestre les orientations verticale, longitudinale et transversale selon le repère V, L, T indiqué aux figures dont les axes longitudinal L et transversal T s'étendent dans un plan horizontal.

Par convention, l'axe longitudinal L est orienté de l'arrière vers l'avant.

Dans la description qui va suivre, des éléments identiques, similaires ou analogues seront désignés par les mêmes chiffres de référence.

### Premier exemple de réalisation

### Figures 1 à 3.

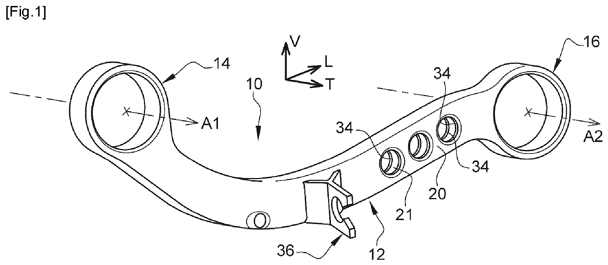

On a représenté à la figure 1 un premier exemple de réalisation d'une biellette de suspension 10 qui est essentiellement constituée d'un corps allongé 12 qui s'étend longitudinalement entre une première extrémité 14 et une seconde extrémité 16 de raccordement de la biellette 10 à différents composants (Non représentés) appartenant à d'autres éléments mobiles de la suspension d'une roue de véhicule automobile ou bien à la structure de caisse et par exemple à un berceau.

Chaque extrémité 14,16 est ici conformée en une douille cylindrique d'axe A1, A2.

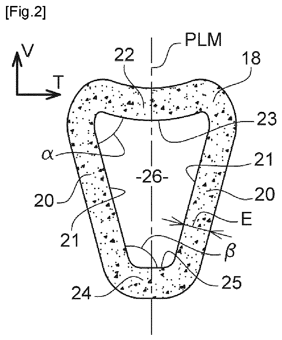

À titre d'exemple non limitatif, la biellette 10 présente une symétrie générale de conception par rapport à un plan vertical et longitudinal médian PLM représenté à la figure 2 et les axes A1 et A2 sont orthogonaux à ce plan de symétrie.

Ainsi, le corps 12 est un corps allongé selon la direction générale longitudinale D passant par les deux axes A1 et A2, et qui s'étend depuis la première extrémité arrière 14 jusqu'à la seconde extrémité avant 16 selon l'orientation de l'axe longitudinal L.

La biellette de suspension 10 est réalisée de préférence en une seule pièce par une technique de fabrication additive, aussi appelée « impression 3D ».

Le corps allongé 12 est un corps creux qui se présente sous la forme d'une enveloppe allongée 18.

A la figure 2, on a représenté le profil général de l'enveloppe 18.

Ce profil se présente sous la forme d'un quadrilatère fermé qui est ici un trapèze comportant :
- deux parois latérales longitudinales et opposées 20 ;
- une paroi supérieure longitudinale 22 et une paroi longitudinale inférieure 24 globalement horizontales.

À titre non limitatif, les parois 20 et 24 sont sensiblement planes, tandis que la paroi supérieure 22 présente ici un profil incurvé dont la convexité est orientée vers l'intérieur 26 de l'enveloppe 18.

En section, par rapport au plan horizontal moyen dans lequel s'étend la paroi supérieure 22, chaque paroi latérale 20 forme un angle aigu alpha. De même, par rapport au plan horizontal moyen dans lequel s'étend la paroi inférieure 24, chaque paroi latérale 20 forme un angle interne et aigu bêta.

L'épaisseur moyenne «E » des différentes parois 20, 22 et 24 peut varier le long du corps allongé 12.

À titre d'exemple non limitatif, les valeurs de ces paramètres géométriques sont les suivantes :
- l'épaisseur E est inférieure ou égale à 10 millimètres
- l'angle alpha est compris entre dix et cinq degrés d'angle
- l'angle bêta est compris entre quarante-cinq et cent degrés d'angle
- le nombre de croisillons de renfort est déterminé en fonction de la longueur du corps allongé 12 et des performances de renfort déterminées attendues.

À partir de la première extrémité arrière 14, le corps creux 12 est renforcé par une série de traverses de renfort 30 qui sont formées en relief, ici sur la face interne 21 de chacune des deux parois latérales opposées 20.

En section, chaque traverse de renfort 30 présente par exemple un profil trapézoïdal.

Les traverses de renfort 30 sont associées deux par deux pour former une série de croisillons de renfort 32.

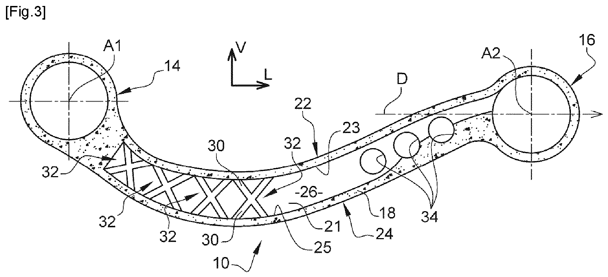

Ainsi, comme on peut le voir à la figure 3, à partir de la première extrémité 14, une portion longitudinale arrière de la face interne 21 de chaque paroi latérale 20 comporte quatre croisillons 32 successifs et adjacents.

Deux traverses de renfort 30 d'un même croisillon 32 sont sensiblement orthogonales.

Les extrémités opposées supérieure et inférieure de chaque traverse de renfort 30 sont respectivement adjacentes à la face interne 23 de la paroi supérieure 22 et à la face interne 25 de la paroi inférieure 24.

Les traverses de renfort 30 formées en relief sur les faces internes 21 peuvent s'étendre jusqu'au niveau du plan vertical et longitudinal médian PLM.

À titre d'exemple non limitatif, on a représenté aux figures 1 et 3 des trous d'allégement 34 formés à travers la paroi de l'enveloppe allongée 18.

Dans chaque paroi latérale 20, les trous d'allégement 34 sont ici réalisés sous la forme d'une série de trois trous 34.

Les trous d'allégement 34 sont formés dans une portion de chaque paroi latérale 20 ne comportant pas de croisillons de renfort 32, et ici à titre d'exemple dans la portion avant qui s'étend longitudinalement vers l'arrière à partir de la seconde extrémité avant 16.

Sans sortir du cadre de l'invention, tant des croisillons de renfort 32 que des trous d'allégement 34 peuvent être formés dans d'autres portions et dans d'autres portions du corps allongé 18.

Comme on peut le voir la figure 1, la technique de fabrication additive, qui peut être métal ou polymère / composite, mise en œuvre pour la production de la biellette de suspension 10 permet de réaliser simultanément et en une seule pièce des parties accessoires telles que par exemple la patte externe de fixation 36.

### Second exemple de réalisation

### Figures 4 à 7.

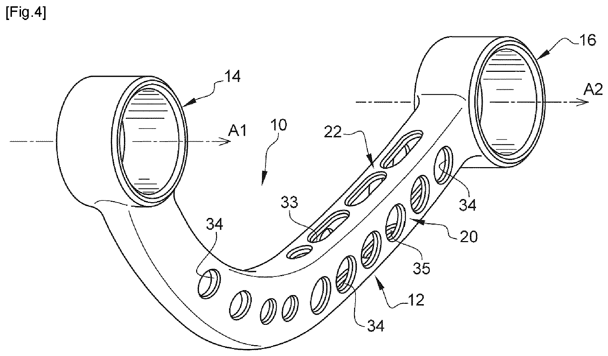

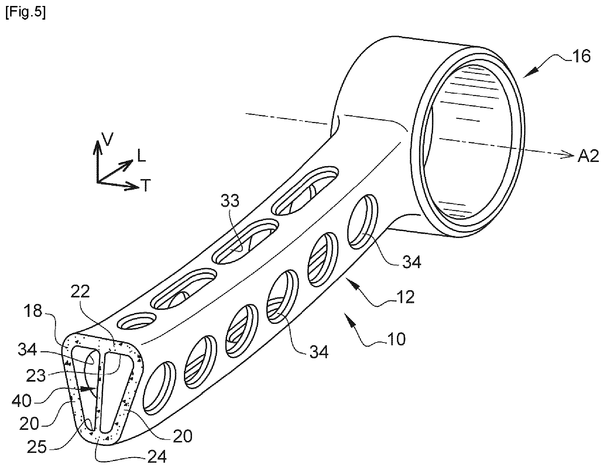

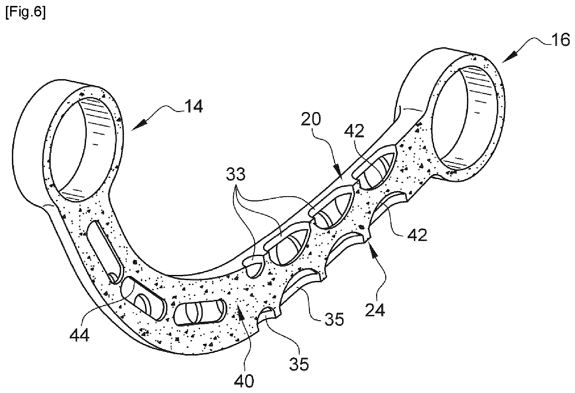

Le second exemple de réalisation illustré aux figures 4 à 7 se distingue essentiellement du précédente en ce que les traverses de renfort 30 et les croisillons de renfort 32 qu'ils constituent sont constitués par une portion d'une âme centrale 40 en forme de plaque interne.

La définition générale du profil en section de l'enveloppe creuse allongée 18 est la même que celle décrite en détail en référence au premier exemple de réalisation.

À titre d'exemple non limitatif, les valeurs de ces paramètres géométriques de la paroi de l'enveloppe allongée 18 sont les suivantes :
- l'épaisseur E est inférieure ou égale à 10 millimètres
- l'angle alpha est compris entre dix et cinq degrés d'angle
- l'angle bêta est compris entre quarante-cinq et cent degrés d'angle
- la géométrie et l'étendue de l'âme centrale allongée 40 sont déterminées en fonction des performances de renfort attendues.

Le corps allongé 12 est renforcé par l'âme centrale 40.

L'âme centrale 40 est constituée par une plaque centrale réalisée en une seule pièce avec le corps allongé creux 12.

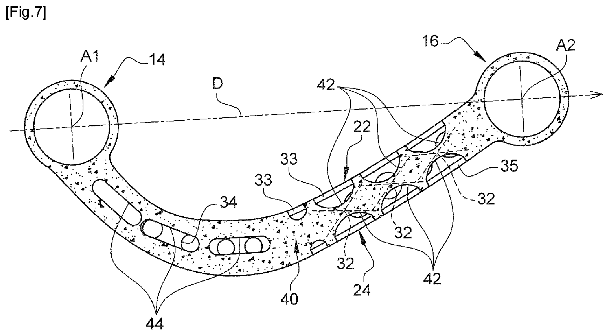

L'âme centrale 40 est agencée dans le plan longitudinal médian PLM et, comme on peut le voir notamment à la figure 7, elle s'étend ici intérieurement sur toute la longueur de l'enveloppe allongée 18 entre ses deux extrémités arrière 14 et avant 16.

Les bords longitudinaux supérieur et inférieur de l'âme centrale 40 s'étendent de tout le long de la face interne 23 de la paroi supérieure 22 et de la face interne 25 de la paroi inférieure 24, respectivement.

Dans cet exemple de réalisation, et à titre non limitatif, les croisillons de renfort 32 appartiennent à la portion avant de l'âme centrale 40 qui s'étend longitudinalement vers l'arrière à partir de l'extrémité avant 16.

Les croisillons de renfort 32, ici au nombre de trois, sont réalisés à la faveur d'évidements 42 qui sont formés dans les bords longitudinaux supérieur et inférieur de l'âme centrale 40, dans la portion avant correspondante de cette dernière.

À la figure 7, les trois croisillons 32 sont matérialisés par trois croix tracées en trait pointillé. Les sommets de l'équivalent des traverses de renfort 30 selon le premier exemple de réalisation se rejoignent au niveau des bords longitudinaux supérieur et inférieur pour constituer une série de trois croisillons de renfort 32 adjacents.

À titre non limitatif, et comme on peut le voir à la figure 7, l'âme centrale 40 soit prolonge longitudinalement vers l'arrière - au-delà de la portion avant renforcée par les croisillons de renfort 32 - par une portion arrière qui participe aussi à la fonction de renfort.

De même que le profil et le nombre des évidements 42 qui déterminent le nombre et la capacité de renforcement des croisillons de renfort 32, la portion arrière de l'âme centrale 40 peut être pleine, ou bien ajourée telle que cela est par exemple illustré au moyen d'une série de trous ou lumières 44, ici au nombre de trois.

S'agissant de la réalisation de trous d'allégement dans l'enveloppe allongée 18, on a représenté à titre non limitatif dans ce second exempt de réalisation, d'une part une série de dix trous d'allégement 34 formée dans chaque paroi latérale 20.

Ces séries sont complétées par une autre série de trous et de lumières 33 formés dans la paroi supérieure 22, et par une autre série de trous et de lumières 35 formés dans la paroi inférieure 24.

Dans le cadre de la prestation de résistance au choc et d'absorption de l'énergie de choc sur une roue d'un train arrière, il est nécessaire d'avoir une tenue mécanique suffisante de la biellette pour les chocs de faible énergie, mais aussi une fusibilité maîtrisée pour les chocs de forte énergie. En parallèle il ne faut pas surdimensionner la biellette pour des raisons de masse et coût. La biellette pièce doit aussi répondre à d'autres prestations telles que la tenue en endurance.

La mise en œuvre d'un procédé d'impression 3D métal ou polymère / composite permet de limiter la masse et d'intégrer plusieurs fonctions à la pièce pour satisfaire à l'objectif de masse minimale et ainsi limiter la consommation du véhicule. La conception selon l'invention permet, pour une géométrie et des dimensions existantes d'une biellette de suspension, de réaliser les autres prestations (choc non endommageant et tenue en endurance).

## Revendications

1. Biellette (10) de suspension de véhicule automobile comportant :
- une première extrémité longitudinale (14) ;
- une seconde extrémité longitudinale (16) reliée à la première extrémité longitudinale par un axe longitudinal (D) ;
- et un corps creux allongé qui s'étend longitudinalement entre la première extrémité (14) et la seconde extrémité (16),
- la biellette (10) est réalisée en une seule pièce par une technique de fabrication additive ;
- le corps (12) creux allongé est délimité par une enveloppe (18) allongée ;
**caractérisée en ce que** le corps (12) creux allongé est renforcé intérieurement par une série de croisillons (32) de renfort qui s'étendent dans un plan parallèle à l' axe longitudinal (D) reliant la première extrémité longitudinale (14) à la seconde extrémité longitudinale (16).

2. Biellette (10) de suspension selon la revendication 1, **caractérisée en ce que** chaque croisillon de renfort est constitué d'une paire de traverses de renfort agencées en croix.

3. Biellette (10) selon la revendication 1, **caractérisée en ce que** l'enveloppe (18) allongée du corps (12) creux allongé comporte au moins une paroi latérale (20) allongée, et **en ce que** les croisillons (32) de renfort sont formés en relief à partir d'une portion de la face interne (21) de ladite au moins une paroi latérale (20).

4. Biellette (10) selon la revendication 3, **caractérisée en ce que** l'enveloppe (18) allongée du corps (12) creux allongé comporte au moins deux parois latérales (20) allongées opposées, et **en ce que** lesdits croisillons (32) de renfort sont formés en relief à partir d'une portion de la face interne (21) de chacune desdites au moins deux parois latérales (20).

5. Biellette (10) selon l'une quelconque des revendications 3 ou 4, **caractérisée en ce que** chaque dite portion de la face interne (21) d'une paroi latérale (20) allongée s'étend longitudinalement depuis une extrémité longitudinale du corps (12) creux.

6. Biellette (10) selon l'une quelconque des revendications 3 à 5, **caractérisée en ce que** le corps (12) creux allongé comporte une série de trous (34) d'allégement qui sont formés dans des portions longitudinales de l'enveloppe (18) allongée qui sont dépourvues de croisillons (32) de renfort.

7. Biellette (10) selon la revendication 1, **caractérisée en ce que** lesdits croisillons (32) de renfort s'étendent dans un plan longitudinal interne à l'enveloppe (18) allongée, notamment dans un plan longitudinal médian du corps (12) creux.

8. Biellette (10) selon l'une quelconque des revendications précédentes, **caractérisée en ce que** le corps (12) creux allongé comporte une âme (40) interne de renfort qui s'étend longitudinalement à l'intérieur de l'enveloppe (18) allongée, et **en ce qu'**au moins une portion longitudinale de cette âme (40) interne de renfort est constituée par lesdits croisillons (32) de renfort.

9. Biellette (10) selon la revendication 8, **caractérisée en ce que** l'âme (40) interne de renfort est conformée en une plaque interne qui relie entre elles deux parois opposées (22, 24) de l'enveloppe (18) allongée et qui comporte des évidements (42) dont une série délimite lesdits croisillons (32) de renfort.

10. Biellette (10) selon la revendication précédente, **caractérisée en ce que** le corps (12) creux allongé comporte une série de trous d'allégement (33, 35) qui sont formés au moins dans des portions d'au moins une desdites deux parois (22, 24), entre des zones de raccordement desdits croisillons (32) de renfort avec l'enveloppe (18) allongée.

11. Biellette selon l'une quelconque des revendications précédentes, **caractérisée en ce que**, en section par un plan transversal, le corps creux allongé se présente sous une forme fermée, notamment sous la forme d'un quadrilatère fermé, notamment sous la forme d'un trapèze.

## Patentansprüche

1. Aufhängungsstange (10) eines Kraftfahrzeugs, welche aufweist:
- ein erstes Längsende (14);
- ein zweites Längsende (16), das mit dem ersten Längsende durch eine Längsachse (D) verbunden ist;
- und einen lang gestreckten Hohlkörper, der sich zwischen dem ersten Ende (14) und dem zweiten Ende (16) in Längsrichtung erstreckt,
- wobei die Stange (10) durch additive Fertigungstechnik aus einem Stück hergestellt ist;
- wobei der lang gestreckte Hohlkörper (12) von einer lang gestreckten Hülle (18) begrenzt wird; **dadurch gekennzeichnet, dass** der lang gestreckte Hohlkörper (12) innen durch eine Reihe von Verstärkungskreuzstücken (32) verstärkt wird, die sich in einer Ebene erstrecken, die parallel zu der Längsachse (D) ist, welche das erste Längsende (14) mit dem zweiten Längsende (16) verbindet.

2. Aufhängungsstange (10) nach Anspruch 1, **dadurch gekennzeichnet, dass** jedes Verstärkungskreuzstück aus einem Paar von kreuzförmig angeordneten Verstärkungsquerstreben besteht.

3. Stange (10) nach Anspruch 1, **dadurch gekennzeichnet, dass** die lang gestreckte Hülle (18) des lang gestreckten Hohlkörpers (12) mindestens eine lang gestreckte Seitenwand (20) aufweist, und dadurch, dass die Verstärkungskreuzstücke (32) von einem Abschnitt der Innenseite (21) der mindestens einen Seitenwand (20) aus reliefartig ausgebildet sind.

4. Stange (10) nach Anspruch 3, **dadurch gekennzeichnet, dass** die lang gestreckte Hülle (18) des lang gestreckten Hohlkörpers (12) mindestens zwei gegenüberliegende lang gestreckte Seitenwände (20) aufweist, und dadurch, dass die Verstärkungskreuzstücke (32) von einem Abschnitt der Innenseite (21) jeder der mindestens zwei Seitenwände (20) aus reliefartig ausgebildet sind.

5. Stange (10) nach einem der Ansprüche 3 oder 4, **dadurch gekennzeichnet, dass** jeder besagte Abschnitt der Innenseite (21) einer lang gestreckten Seitenwand (20) sich von einem Längsende des Hohlkörpers (12) aus in Längsrichtung erstreckt.

6. Stange (10) nach einem der Ansprüche 3 bis 5, **dadurch gekennzeichnet, dass** der lang gestreckte Hohlkörper (12) eine Reihe von Erleichterungslöchern (34) aufweist, die in Längsabschnitten der lang gestreckten Hülle (18) ausgebildet sind, die nicht mit Verstärkungskreuzstücken (32) versehen sind.

7. Stange (10) nach Anspruch 1, **dadurch gekennzeichnet, dass** sich die Verstärkungskreuzstücke (32) in einer inneren Längsebene der lang gestreckten Hülle (18) erstrecken, insbesondere in einer Mittellängsebene des Hohlkörpers (12).

8. Stange (10) nach einem der vorhergehenden Ansprüche, **dadurch gekennzeichnet, dass** der lang gestreckte Hohlkörper (12) einen inneren Verstärkungskern (40) aufweist, der sich im Inneren der lang gestreckten Hülle (18) in Längsrichtung erstreckt, und dadurch, dass mindestens ein Längsabschnitt dieses inneren Verstärkungskerns (40) aus den Verstärkungskreuzstücken (32) besteht.

9. Stange (10) nach Anspruch 8, **dadurch gekennzeichnet, dass** der innere Verstärkungskern (40) als eine innere Platte ausgebildet ist, die zwei gegenüberliegende Wände (22, 24) der lang gestreckten Hülle (18) miteinander verbindet und die Vertiefungen (42) aufweist, wobei eine Reihe derselben die Verstärkungskreuzstücke (32) begrenzt.

10. Stange (10) nach dem vorhergehenden Anspruch, **dadurch gekennzeichnet, dass** der lang gestreckte Hohlkörper (12) eine Reihe von Erleichterungslöchern (33, 35) aufweist, die wenigstens in Abschnitten mindestens einer der zwei Wände (22, 24) zwischen Verbindungsbereichen der Verstärkungskreuzstücke (32) mit der lang gestreckten Hülle (18) ausgebildet sind.

11. Stange nach einem der vorhergehenden Ansprüche, **dadurch gekennzeichnet, dass** der lang gestreckte Hohlkörper im Schnitt mit einer Querebene eine geschlossene Form aufweist, insbesondere die Form eines geschlossenen Vierseits, insbesondere die Form eines Trapezes.

## Claims

1. Motor vehicle suspension link (10) comprising:
- a first longitudinal end (14);
- a second longitudinal end (16) connected to the first longitudinal end by a longitudinal axis (D);
- and an elongate hollow body that extends longitudinally between the first end (14) and the second end (16),
- the link (10) is made in a single piece via an additive manufacturing technique;
- the elongate hollow body (12) is delimited by an elongate envelope (18); **characterized in that** the elongate hollow body (12) is reinforced internally by a series of reinforcing crosspieces (32) that extend in a plane parallel to the longitudinal axis (D) connecting the first longitudinal end (14) to the second longitudinal end (16).

2. Suspension link (10) according to Claim 1, **characterized in that** each reinforcing crosspiece is constituted by a pair of reinforcing crossmembers arranged in a cross.

3. Link (10) according to Claim 1, **characterized in that** the elongate envelope (18) of the elongate hollow body (12) comprises at least one elongate lateral wall (20), and **in that** the reinforcing crosspieces (32) are formed in relief from a portion of the internal face (21) of said at least one lateral wall (20).

4. Link (10) according to Claim 3, **characterized in that** the elongate envelope (18) of the elongate hollow body (12) comprises at least two opposite elongate lateral walls (20), and **in that** said reinforcing crosspieces (32) are formed in relief from a portion of the internal face (21) of each of said at least two lateral walls (20).

5. Link (10) according to either one of Claims 3 and 4, **characterized in that** each said portion of the internal face (21) of an elongate lateral wall (20) extends longitudinally from a longitudinal end of the hollow body (12).

6. Link (10) according to any one of Claims 3 to 5, **characterized in that** the elongate hollow body (12) comprises a series of lightening holes (34) that are formed in longitudinal portions of the elongate envelope (18) that are free of reinforcing crosspieces (32).

7. Link (10) according to Claim 1, **characterized in that** said reinforcing crosspieces (32) extend in a longitudinal plane internal to the elongate envelope (18), in particular in a median longitudinal plane of the hollow body (12).

8. Link (10) according to any one of the preceding claims, **characterized in that** the elongate hollow body (12) comprises an internal reinforcing web (40) that extends longitudinally inside the elongate envelope (18), and **in that** at least one longitudinal portion of this internal reinforcing web (40) is constituted by said reinforcing crosspieces (32).

9. Link (10) according to Claim 8, **characterized in that** the internal reinforcing web (40) is shaped as an internal plate that connects two opposite walls (22, 24) of the elongate envelope (18) to each another and that comprises cutouts (42), a series of which delimits said reinforcing crosspieces (32).

10. Link (10) according to the preceding claim, **characterized in that** the elongate hollow body (12) comprises a series of lightening holes (33, 35) that are formed at least in portions of at least one of said two walls (22, 24), between zones of connection of said reinforcing crosspieces (32) with the elongate envelope (18) .

11. Link according to any one of the preceding claims, **characterized in that**, in section on a transverse plane, the elongate hollow body is in a closed form, in particular in the form of a closed quadrilateral, in particular in the form of a trapezium.
